# EUROPÄISCHE PATENTSCHRIFT

(11) **EP 0 991 549 B1**
(45) Veröffentlichungstag und Bekanntmachung des Hinweises auf die Patenterteilung: **20.03.2002**
(21) Anmeldenummer: 98942477.5
(22) Anmeldetag: 01.07.1998
(51) Int. Cl.: B60R 21/06

(54) **SICHERHEITSNETZANORDNUNG MIT BELASTUNGSANZEIGE**
SAFETY NET SYSTEM WITH LOAD INDICATOR
SYSTEME DE FILET DE SECURITE AVEC INDICATION DE CHARGE

(30) Priorität: 04.07.1997 DE 19728587
(43) Veröffentlichungstag der Anmeldung: 12.04.2000
(73) Patentinhaber: BOS GmbH & Co. KG, 73760 Ostfildern (DE)
(72) Erfinder: AMENT, Eduard, D-82212 Herrsching-Breitbrunn (DE); EHRENBERGER, Marina, D-73730 Esslingen (DE); SEEL, Holger, D-71134 Aidlingen (DE)
(74) Vertreter: Patentanwälte Rüger, Barthelt & Abel
(86) Internationale Anmeldenummer: DE9801818
(87) Internationale Veröffentlichungsnummer: WO9901316

(56) Entgegenhaltungen:
- WO-A-91/12155
- DE-A- 4 010 209
- DE-A- 4 239 470
- DE-A- 4 336 380
- US-A- 4 482 137
- US-A- 5 427 486

## Beschreibung

Bei Kombi-PKW besteht auch bei aufgerichteter Rücksitzbank eine durchgehende Verbindung zwischen dem Laderaum und dem Fahrgastraum. Auffahrunfälle bedingen die Gefahr, dass durch diese Öffnung im Laderaum befindliche Gegenstände in den Fahrgastraum geschleudert werden und dort Personen verletzen. Um dies zu verhindern, werden Sicherheitsnetzanordnungen verwendet, die diese Öffnung absperren. Eine gattungsbildende Sicherheitsnetzanordnung ist aus DE-A-4 336 380 bekannt.

Ähnliche Verhältnisse herrschen bei PKW, bei denen die Rücksitzbank umlegbar ist, um einen vergrößerten Lade-oder Kofferraum zu erhalten. Auch hier werden Sicherheitsnetze verwendet, die die Personen im Fahrgastraum schützen sollen.

Bereits bei leichten Auffahrunfällen können unter Umständen Gegenstände aus dem Laderaum mit verhältnismäßig großer Wucht gegen das Sicherheitsnetz fliegen. Obwohl das Sicherheitsnetz möglicherweise keine ohne weiteres erkennbare Beschädigungen aufweist, ist es durch einen solchen Vorfall dennoch vorgeschädigt. Diese Vorschädigung birgt die Gefahr des Versagens des Sicherheitsnetzes bei einem späteren ernsthaften Crash und die Gegenstände aus dem Laderaum können nicht mehr zurückgehalten werden.

Ausgehend hiervon ist es Aufgabe der Erfindung, eine Sicherheitsnetzanordnung zu schaffen, bei der nach einem Crash signalisiert wird, ob mit einer Vorschädigung des Sicherheitsnetzes gerechnet werden muss.

Diese Aufgabe wird durch eine Sicherheitsnetzanordnung mit den Merkmalen des Anspruches 1 gelöst.

Bei der neuen Sicherheitsnetzanordnung ist eine Belastungsanzeigeeinrichtung vorgesehen, die zwei Signalzustände aufweist. Der eine Signalzustand entspricht dem Ruhezustand, der mit dem unbelasteten Netz korrespondiert. Der andere Zustand ist der Signalzustand, der auftritt, nachdem das Netz mit einer vorbestimmten Kraft belastet wurde, ab der die Gefahr einer Vorschädigung des Netzes nicht mehr auszuschließen ist.

Vorzugsweise ist der Wechsel der Belastungsanzeige aus dem Ruhezustand in den Signalisierungszustand irreversibel, damit die Kenntlichmachung bestehen bleibt und nicht unterdrückt werden kann.

Die Unterbringung der Belastungsanzeigeeinrichtung erfolgt vorteilhafterweise an einer Strebe, mit der das Sicherheitsnetz in der Karosserie zu verankern ist. Dadurch ergeben sich klare räumliche Verhältnisse und auch die Gefahr einer versehentlichen Beschädigung ist minimiert. Außerdem ist die Belastungsanzeigeeinrichtung bei jeder Handhabung des Sicherheitsnetzes unmittelbar im Blickfeld.

Verhältnismäßig einfach lässt sich die Belastungsanzeigeeinrichtung an einem oder beiden Enden der Strebe unterbringen.

Die Belastungsanzeigeeinrichtung kann in sehr einfacher Weise mit Mitteln zum Verzehren von Energie zu einer Baueinheit kombiniert werden. Diese Energie verzehrenden Mittel sollen bei stärkerer Belastung des Sicherheitsnetzes infolge eines starken Auffahrunfalls einen Teil der kinetische Energie der in das Netz geschleuderten Gegenstände aufnehmen und in Wärme umsetzen, um so das Sicherheitsnetz gegen Reißen zu schützen.

Zum Betätigen der Belastungsanzeigeeinrichtung können die Verbindungsglieder verwendet werden, mit denen üblicherweise das Sicherheitsnetz in der Karosserie verankert wird. Diese Verankerungsglieder sind normalerweise gegenüber der Strebe längsverschieblich und sie sind, um die Belastungsanzeigeeinrichtung zu realisieren, zusätzlich auch noch um einen nennenswerten Betrag in Querrichtung, also in radialer Richtung, bezogen auf die Strebe, auszulenken. Dabei definiert die Knicksteifigkeit der Verankerungsglieder jene Grenzkraft, ab der die Belastungsanzeigeeinrichtung ausgelöst wird, d.h. in ihren Signalisierungszustand wechselt.

Die Belastungsanzeigeeinrichtung enthält vorteilhafterweise ein Signalisierungsglied, das zwischen einer Ruhestellung und einer Signalisierungsstellung hin- und herbewegt werden kann. Beim Überschreiten der kritischen Belastungsgrenze geht das Signalisierungsglied in den Signalisierungszustand über.

Das Signalisierungsglied ist vorzugsweise fahnenartig schwenkbar gehaltert, damit es nach dem Auslösen deutlich sichtbar in dem Raum steht und nicht versehentlich übersehen werden kann. Insbesondere wenn das Sicherheitsnetz das nächste Mal ausgehängt wird, wird dem Benutzer spätestens das wegstehende Signalisierungsglied ins Auge fallen und ihn darauf aufmerksam machen, dass ein Ersatz der Sicherheitsnetzanordnung wegen der Gefahr der Vorschädigung angeraten ist.

Das Signalisierungsglied kann an der Strebe bzw. an einer Hülse, die zu den Energie verzehrenden Mitteln gehört, anscharniert sein.

Die Strebe ist wenigstens an einem Ende rohrförmig ausgestaltet und mindestens an diesem Ende befindet sich eine Hülse, in der das Verankerungsglied längsverschieblich sitzt. Die Hülse ist mit einem die Strebe außen übergreifenden Abschnitt versehen, an dem das Signalisierungsglied schwenkbar gelagert ist.

Um das Signalisierungsglied zu betätigen, ist an dem Signalisierungsglied ein Betätigungsfortsatz vorgesehen, der in das Innere der Hülse hineinragt und das Verankerungsglied abtastet. Damit keine zusätzlichen Bohrungen an der Strebe angebracht werden müssen, befindet sich das Betätigungsglied vorzugsweise in der Nähe des außenliegenden Endes der Hülse.

In der Ruhestellung ist das Signalisierungsglied verrastet, wobei die Verrastung beim Wechsel in den Signalisierungszustand irreversibel zerstört wird.

Damit das Signalisierungsglied im Signalisierungszustand auch deutlich absteht, ist es in die Signalisierungsstellung durch eine Feder vorgespannt.

Das Betätigungsglied ist derart gestaltet, dass es auf eine Querbewegung des Verankerungsgliedes relativ zu der Strebe anspricht.

Im Übrigen sind Weiterbildungen der Erfindung Gegenstand von Unteransprüchen.

In der Zeichnung ist ein Ausführungsbeispiel des Gegenstandes der Erfindung dargestellt. Es zeigen:
Fig. 1 das zwischen dem Dach eines Kraftfahrzeuges und der Rücklehne aufgespannte Sicherheitsnetz, in einer perspektivischen Darstellung, mit teilweise aufgebrochener Fahrzeugkarosserie,
Fig. 2 ein Ende der Befestigungsstrebe des Sicherheitsnetzes nach Fig. 1, in einem Längsschnitt,
Fig. 3 die Befestigungsstrebe nach Fig. 2, in einer Stirnansicht, mit geschnittenem Verankerungsglied und teilweise aufgebrochen, und

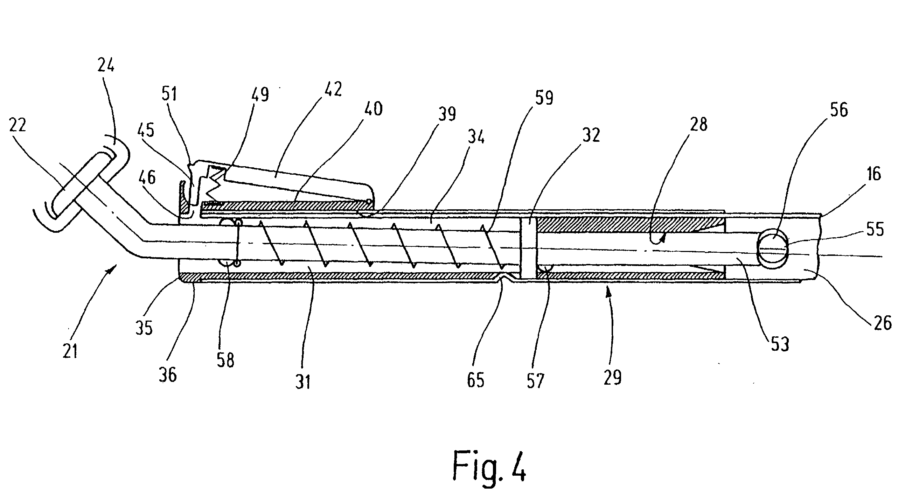

Fig. 4 die Befestigungsstrebe nach Fig. 2, nach dem Auslösen des Signalisierungsglieds.

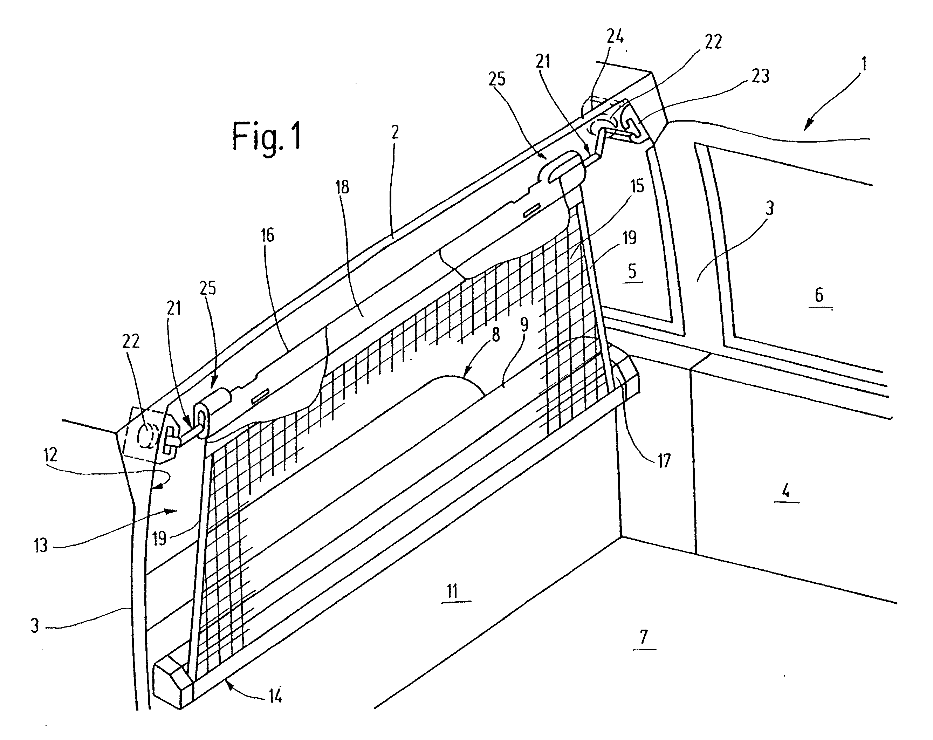

Fig. 1 zeigt in aufgebrochener Darstellung einen Heckbereich 1 eines Kombi-PKWs. Der Heckbereich 1 ist perspektivisch etwa aus der Sicht des weggebrochenen linken seitlichen Heckfensters dargestellt und weist ein Dach 2 auf, das seitlich von zwei C-Säulen 3 getragen wird. Vor der C-Säule 3 liegt unterhalb des Daches 2 und oberhalb einer Seitenwand 4 ein hinteres Seitenfenster 5, während hinter der C-Säule 3 ein weiteres hinteres Seitenfenster 6 angeordnet ist. Die Anordnung der Seitenfenster 5 und 6 ist auf der linken Seite des Heckbereiches spiegelbildlich zu denken. Nach unten wird der Heckbereich 1 von einer im Wesentlichen ebenen Ladefläche 7 abgeschlossen.

Zwischen den beiden hinteren Seitenfenstern 5 befindet sich auf der Höhe der C-Säulen 3 eine Rücksitzbank 8, deren Rücksitzlehne 9 mit einer Rückseite 11 etwa zwischen den beiden C-Säulen 3 steht.

Zwischen der Unterkante des Daches 2 und der Oberkante der Rücksitzlehne 9 befindet sich eine Öffnung 12, über die ein vor der Rücksitzlehne 9 befindlicher Fahrgastraum mit dem dahinter befindlichen Laderaum des Heckbereiches 1 in Verbindung steht.

Um zu verhindern, dass bei einem Crash Gegenstände aus dem Heckbereich 1 in den Fahrgastraum geschleudert werden, wird die Öffnung 12 durch eine Sicherheitsnetzanordnung 13 verschlossen. Zu der Sicherheitsnetzanordnung 13 gehören ein Gehäuse 14, ein Sicherheitsnetz 15 und eine an dem Sicherheitsnetz 15 angebrachte Zugstange oder Strebe 16.

Das Gehäuse 14 ist ein längliches, kastenförmiges Gehäuse, das an seiner Oberseite mit einem über die gesamte Länge durchlaufenden Auslaufschlitz 17 versehen ist. Im Inneren des Gehäuses 14 ist in bekannter Weise eine nicht erkennbare Wickelwelle drehbar gelagert, die im Sinne des Aufwickelns des Sicherheitsnetzes 15 mittels eines Federmotors vorgespannt ist. Das Gehäuse 14 ist an der Rückseite 11 der Rücksitzlehne 9 lösbar befestigt.

Das Sicherheitsnetz 15 ist mit einer Kante mit der Wickelwelle verbunden und führt, ausgehend von der Wickelwelle, durch den Auslaufschlitz 17 aus dem Gehäuse 14 heraus. Die zu der Wickelwelle parallele Kante des Sicherheitsnetzes ist mit einer Schlaufe 18 versehen, die über die gesamte Breite des etwa trapezförmigen Sicherheitsnetzes 15 durchläuft. In der Schlaufe steckt die Strebe 16.

Der Vollständigkeit halber ist an dieser Stelle noch erwähnt, dass das Sicherheitsnetz 15 an seinen beiden seitlichen Kanten durch Einfassbänder 19 verstärkt ist.

Aus der Zugstange bzw. Strebe 16 stehen an beiden Enden Verankerungsglieder 21 vor, die pilzförmige Köpfe 22 tragen. Die pilzförmigen Köpfe 22 sind bei aufgespanntem Sicherheitsnetz 15 in endseitig verschlossene T-förmige Nuten 23 von Aufnahmetaschen 24 eingeführt. Die Aufnahmetaschen 24 befinden sich knapp unterhalb der Dachunterkante 2.

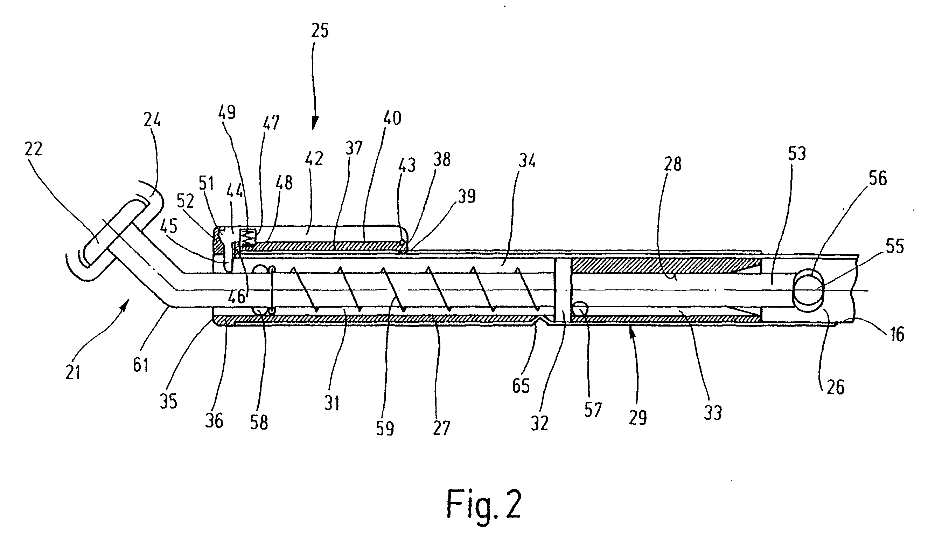

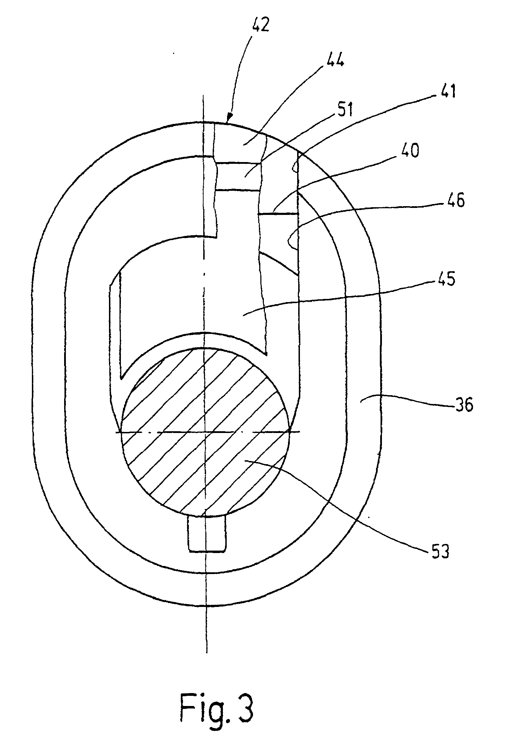

Auch bei leichten Auffahrunfällen kann es bereits geschehen, dass Gegenstände aus dem Heckbereich 1 in Richtung auf den Fahrgastraum geschleudert werden. Bei dieser Bewegung werden sie von dem aufgespannten Sicherheitsnetz 15 aufgefangen, das unter Umständen durch diesen Auffangvorgang in nicht deutlich erkennbarer Weise vorgeschädigt werden kann, mit der Gefahr, bei einem späteren Crash, bei dem wieder Gegenstände aus dem Laderaum gegen das Sicherheitsnetz 15 fliegen, zu versagen. Um einer solchen gefährlichen Situation vorzubeugen, ist die Sicherheitsnetzanordnung 13 zusätzlich mit zwei Belastungsanzeigeeinrichtungen 25 versehen, die sich an den beiden Enden der Strebe 16 befinden. Der Aufbau der Belastungsanzeigeeinrichtung 25 ergibt sich aus den Fig. 2 und 3, in denen ferner zu erkennen ist, dass die Belastungsanzeigeeinrichtung 25 mit Mitteln zu einer Baueinheit kombiniert ist, die dazu dienen, bei einem schweren Crash mit sehr starken Verzögerungen zusätzlich die kinetische Energie der in das Sicherheitsnetz fliegenden Teile 15 in Verformungsenergie umzusetzen. Dadurch wird gleichzeitig der "Bremsweg" für die gegen das Netz 15 fliegenden Teile verlängert und die Verzögerungsspitzen erhalten kleinere Werte.

In den Fig. 2 und 3 ist z.B. das linke Ende der Zugstange oder Strebe 16 veranschaulicht. Das andere Ende dieser Zugstange 16 ist spiegelbildlich, weshalb die nachfolgend gegebene Beschreibung auch für das andere Ende gilt.

Die Strebe 16 wird durch ein metallisches Rohr gebildet, das durchgehend zylindrischen Querschnitt hat und einen zylindrischen Innenraum 26 aufweist, der sich ebenfalls über die gesamte Länge erstreckt. Von dem dargestellten Ende her ist in den Innenraum 26 eine aus Kunststoff bestehende Hülse 27 eingeschoben, die eine zu der Längsachse der Strebe 16 koaxiale Bohrung 28 enthält und außen weitgehend zylindrisch ist.

Die Bohrung 28 gliedert sich in zwei Abschnitte 29 und 31, wobei an der Übergangssstelle zwischen den beiden Abschnitten 29 und 31 ein Stahlring 32 eingefügt ist, der eine zu der Bohrung 28 koaxiale Bohrung mit größerem Durchmesser enthält, damit die Kunststoffmasse der Hülse 27 durch den Ring 32 hindurchführen kann, um die beiden Abschnitte 29 und 31 stoffschlüssig miteinander zu verbinden.

Die Hülse 27 steckt so in der Strebe 16, dass ihr Abschnitt 29 zu der Mitte der Strebe 16 weist. In diesem Abschnitt 29 enthält die Bohrung 28 eine gerade durchlaufende schmale Nut 33, die bei dem Ring 32 beginnt und bis zum von dem Ring 32 abliegenden Ende des Abschnittes 29 reicht. Die Bohrung 28 hat in dem Abschnitt 31 einen etwas größeren Durchmesser und außerdem ist sie an der in Fig. 2 nach oben weisenden Seite bei 34 geschlitzt. Dieser Schlitz bei 34 hat eine Breite etwa entsprechend dem Durchmesser der Bohrung 28 im Bereich des Abschnittes 29. Er beginnt bei dem Ring 32 und reicht bis zu einer von dem Ring 32 abliegenden Stirnfläche 35.

Im Bereich der Stirnfläche 35 bildet die Hülse 27 einen radial nach außen überstehenden Bund 36, der mit seiner Schulter im montierten Zustand stumpf an der Stirnseite der Strebe 16 anliegt.

An dem außenliegenden Bund 36 ist ein laschenförmiger Fortsatz 37 einstückig angeformt, dessen Ende 38 in Richtung auf die Mitte der Strebe 16 zeigt. Das Ende 38 liegt im deutlichen Abstand von dem Ring 32.

Der Fortsatz 37 weist eine Unterseite 39 auf, die auf der Außenseite der Strebe 16 aufliegt und dementsprechend teilkreisförmig konturiert ist. Der Unterseite 39 gegenüber verläuft eine Oberseite 41, die im Wesentlichen plan ist.

Von der Oberseite 40 gehen an dem Fortsatz 37 zwei seitliche Wände 41 aus, die wegen der geschnittenen Darstellung in Fig. 2 nicht zu erkennen sind; in Fig. 3 ist eine der Seitenwände 41 zu erkennen. Diese Wände reichen von dem Bund 36 bis zu dem Ende 38 und begrenzen zusammen mit der Oberseite 41 eine im Querschnitt rechteckige Nut. In dieser Nut liegt im Ruhezustand ein fähnchen- oder klappenartiges Signalisierungsglied 42. Das Signalisierungsglied 42 ist an dem Ende 38 über ein Scharnier 43 mit dem Fortsatz 37 verbunden. Dieses Scharnier 43 kann ein Filmscharnier sein, wenn das Signalisierungsglied 42 mit dem Fortsatz 37 einstückig verbunden ist oder es kann sich um ein Scharnier mit Achszapfen handeln, die in entsprechende Näpfchen eingreifen, die wiederum je nach Lage entweder in den Seitenwänden 41 des Fortsatzes 37 oder dem Signalisierungsglied 42 ausgebildet sind.

Das Signalisierungsglied 42 hat eine Querschnittsgestalt, die an die Querschnittsgestalt der Nut auf der Oberseite 41 des Fortsatzes 37 angepasst ist, so dass sich eine nach oben glatte Fläche zwischen den Seitenwänden 41 des Fortsatzes 37 ergibt.

Das Signalisierungsglied 42 weist ein vorderes Ende 44 auf, das sich vor der Stirnseite des Rohres 16 befindet. An diesem vorderen Ende ist ein Betätigungsglied 45 in Gestalt eines armförmigen Fortsatzes einstückig angeformt. Dieses Betätigungsglied 45 ragt durch eine angepasste Öffnung 46 in der Außenumfangsfläche der Hülse 27, und zwar an einer Stelle, die sich unmittelbar vor der Stirnseite der Strebe 16 befindet.

Wie die Figur erkennen lässt, ragt das Betätigungsglied 45 im Ruhezustand in den Spalt oder Schlitz 34 der Hülse 27 hinein. Die Länge des Betätigungsglieds 45 ergibt sich aus der nachfolgenden Funktionsbeschreibung.

In Sackbohrungen 47 und 48, die in der Oberseite 41 des Fortsatzes 37 und der Unterseite des Signalisierungsgliedes 42 ausgebildet sind, sitzt eine Druckfeder 49, die das Signalisierungsglied 42 in Richtung von dem Fortsatz 37 weg vorspannt. Um das Signalisierungsglied 42 entgegen der Wirkung der Feder 49 auf der Oberseite 41 festzuhalten, ist eine Rastnase 51 vorhanden, die in eine komplementäre Rastausnehmung 51 eingreift, die sich in der radialen Verlängerung der Schulter des Bunds 36 bzw. dessen Rückseite befindet und damit vor der Stirnseite 44 des Signalisierungsgliedes 42.

Wie bereits oben erwähnt, ist die Belastungsanzeigeeinrichtung 25 eine Baueinheit gemeinsam mit den Mitteln, die dazu dienen, bei einem Crash Bewegungsenergie der in das Sicherheitsnetz 15 geschleuderten Gegenstände in Verformungsenergie bzw. Wärme umzusetzen. Um dies zu erreichen, ist das Verankerungsglied 21 mit einem zylindrischen stangenförmigen Schaft 53 versehen, der durch die Bohrung 28 der Hülse 27 hindurchläuft. Sein innenliegendes Ende 54 ist durch Anquetschen von seitlich vorstehenden Ohren oder Laschen 56 verdickt. Ferner ist im Abstand zu dem Ende 55 bei 57 eine weitere Lasche oder ein Ohr angequetscht, das in die Nut 33 vorsteht und zusammen mit der Nut 33 als Verdrehsicherung wirkt, damit sich der Schaft 53 nicht gegenüber der Strebe 16 verdrehen kann.

Der Schaft 53 des Verankerungsglieds 21 wird in dem Bohrungsabschnitt 29 mit geringem Spiel so geführt, dass er sich nicht ohne Verformung an dem Betätigungsglied 45 anlegen kann.

Zwei weitere Ohren oder Laschen 58 sind noch innerhalb der Hülse 27 kurz vor deren Stirnseite 35 angequetscht. Sie dienen als Widerlager für eine Schraubendruckfeder 59, die sich andernends an dem Stahlring 32 bzw. einer in diesem Bereich befindlichen Schulter abstützt, die den Übergang zwischen dem Abschnitt 31 der Bohrung 28 und dem Abschnitt 29 darstellt. Mit Hilfe dieser Feder 59 wird das Verankerungsglied 21 in die aus der Strebe 16 vorgeschobene Stellung vorgespannt, solange bis die angequetschte Lasche 57 an der innenliegenden Rückseite des Stahlrings 32 anliegt.

Außerhalb der Hülse 27 ist der Schaft 53 bei 61 abgewinkelt und er trägt an seinem außenliegenden freien Ende den bereits erwähnten Pilzkopf 22.

Um die Hülse 27 in der Strebe axial zu sichern, ist im montierten Zustand in die Strebe 16 eine Sicke 65 eingeprägt, die in eine in der Außenseite der Hülse 27 eingeformte Nut eingreift.

Soweit die Dimensionierungen der oben erwähnten Bauteile nicht bereits aufgrund der dortigen Beschreibung klar sind, ergeben sie sich aus der nachfolgenden Beschreibung der Arbeitsweise der Belastungsanzeigeeinrichtung 25.

Im Normal- oder Ruhezustand liegen die Signalisierungsglieder 42 der an den beiden Enden der Strebe 16 vorhandenen Belastungsanzeigeeinrichtungen 25 flach und stehen nicht über die seitlichen Wände 41 des Fortsatzes 37 über. Die Handhabung der Sicherheitsnetzanordnung 13 ist wie üblich, d.h. zum Abgrenzen des Laderaums gegenüber dem Fahrgastraum wird an der Strebe 16 gegen die Wirkung des Federmotors, der an der Wickelwelle angreift, das Sicherheitsnetz 13 aus dem Auslaufschlitz 17 herausgezogen soweit, bis die beiden Verankerungsglieder 21 mit den Pilzköpfen 22 in die Aufnahmetaschen 24 eingehängt werden können.

Wenn ein solchermaßen ausgerüstetes Fahrzeug frontal gegen ein Hindernis fährt, entstehen Verzögerungskräfte, die in dem Laderaum befindliche Gegenstände nach vorne gegen das Sicherheitsnetz 15 fliegen lassen. Bei leichten Auffahrunfällen mit geringeren Verzögerungen treten kleine Kräfte auf.

Wenn die Kräfte zu klein sind, als dass eine Schädigung auftreten könnte, tritt keinerlei Verbiegung des Schaftes 53 der Verankerungsglieder 21 auf. Die Verankerungsglieder 21 werden in dem Bohrungsabschnitt 29 so geführt, dass sie aufgrund der auftretenden Biegekraft sich mit ihrem äußeren Ende in der Nähe des Knicks 61 noch nicht an dem Betätigungsglied 45 anlegen können. Dieses verläuft im Ruhezustand mit einem geringen Abstand zu der Umfangsfläche des Schaftes 53, und zwar so, dass aufgrund des notwendigen Spiels, den der Schaft 53 in der Bohrung 28 hat, keine Berührung zwischen Teilen des Verankerungsgliedes 21 und dem Betätigungsglied 45 zustandekommen kann.

Verzögerungen, die einen Kontakt zwischen Gegenständen in dem Laderaum und dem Sicherheitsnetz 15 hervorrufen und klein genug sind, lösen die Belastungsanzeigeeinrichtung 25 demzufolge nicht aus. Treten jedoch größere Verzögerungswerte auf, d.h. die Gegenstände drängen mit größerer Kraft gegen das Sicherheitsnetz 15, so werden entsprechend große Knick- und Biegekräfte von der Strebe 16 über den Abschnitt 29 der Bohrung 28 auf den Schaft 53 übertragen.

Diese Kräfte können zu klein sein, als dass sie die Energie verzehrenden Mittel ansprechen lassen, und die auch noch nicht zu einem Durchbiegen der Strebe 16 führen. Dennoch können diese Kräfte so groß sein, dass sie das textile Sicherheitsnetz 15 in nicht erkennbarer Weise vorschädigen. Um dies zu erfassen und dem Benutzer sichtbar zu machen, ist die Belastungsanzeigeeinrichtung 25 vorgesehen.

Da der Schaft 53 im Bereich zwischen dem Stahlring 32 und der Stirnseite 35 in Richtung parallel zu den auftretenden Knickkräften in der Hülse 27 nicht geführt ist, weil in diesem Bereich die Bohrung 28 in den Schlitz 34 übergeht, wird sich der Schaft 53, wie Fig. 3 zeigt, jenseits des Stahlrings 32 verbiegen (die Kräfte, die durch die Gegenstände hervorgerufen werden, wirken, bezogen auf Fig. 2, von oben nach unten). Aufgrund dieser Verbiegung, die bleibend oder elastisch sein kann, wird sich jedenfalls bei hinreichender Amplitude die Außenseite des Schaftes 53 an dem freien Ende des Betätigungsgliedes 45 anlegen und das Betätigungsglied 45, bezogen auf den Schaft 53, radial wegdrücken. Die dabei auftretende Kraft ist so groß, dass die Verrastung der Nase 51 in der Rastausnehmung 52 die Bewegung nicht verhindern kann und die Rastausnehmung 52, bezogen auf Fig. 2, nach oben wegbricht.

Unter der Wirkung der Vorspannfeder 59 wird das Signalisierungsglied 42 aus der Stellung, in der es im Wesentlichen zu der Strebe 16 parallelliegt, wegklappen, wie dies Fig. 3 erkennen lässt. Dadurch wird dem Benutzer signalisiert, dass durch den Auffahrunfall auch das Sicherheitsnetz 13 geschädigt wurde und ein Austausch erforderlich ist.

Wie sich aus der Beschreibung ergibt, legt die Biegesteifigkeit des Schaftes 53 die am Sicherheitsnetz 15 wirkende Kraft fest, bei deren Überschreiten die Belastungsanzeigeeinrichtung 25 ausgelöst wird.

Bei Auffahrunfällen mit noch stärkerer Verzögerungswirkung wird schließlich auch die Strebe 16 sich mehr oder weniger stark mit durchbiegen und die Kraft der gegen das Sicherheitsnetz 15 drängenden Gegenstände ist bestrebt, die Strebe 16 von dem Schaft 53 des betreffenden Verankerungsgliedes 21 herunterzuziehen. Bei dieser Bewegung wird zunächst die Lasche 57 an dem Ring 32 abgeschert. Die weitere Bewegung führt dazu, dass das verdickte Ende 55 des Schaftes 53 in die Bohrung 28 eindringt und sie dabei weitet. Hierdurch wird die Bewegungsenergie in Verformungsenergie der Hülse 27 bzw. der sie außen bandagierenden Strebe 16 umgesetzt. Dies ist im Einzelnen beispielsweise dem Patent 43 36 380 zu entnehmen.

Damit bei dieser Verformung die Hülse 27 nicht aus der Strebe 16 herausrutschen kann, ist in die Strebe 16 die Sicke 50 eingeprägt, die sich vor derjenigen Stirnseite des Stahlrings 32 befindet, die dem äußeren Ende der Strebe 16 zugekehrt ist. Damit das Eindrücken der Sicke 50 nicht zu einer Deformation der Bohrung 28 führen kann, ist die Hülse 27 an dieser Stelle mit einer entsprechenden umlaufenden Nut versehen.

Eine Sicherheitsnetzanordnung ist mit einer Belastungsanzeigeeinrichtung versehen, um dem Benutzer zu signalisieren, dass an dem Sicherheitsnetz Kräfte gewirkt haben, die möglicherweise zu einer Vorschädigung führen können. Die Belastungsanzeigeeinrichtung wirkt mit den Verankerungsgliedern zusammen, mit denen die Vorderkante des Sicherheitsnetzes in dem Fahrzeug zu verankern ist. Für die Belastungsanzeigeeinrichtung wird die Verformung dieser Verankerungsglieder ausgenutzt, in der Weise, dass eine über ein bestimmtes Maß hinausgehende Verformung der Verankerungsglieder, gleichgültig, ob dauernd oder elastisch, ein Signalisierungsglied aus seiner Ruhestellung wegsprengt.

## Patentansprüche

1. Sicherheitsnetzanordnung (13) zum Schutz des Fahrgastraums von PKW gegenüber dem Laderaum, der mit dem Fahrgastraum über eine Öffnung (12) in Verbindung steht,
mit einem Kanten aufweisenden Sicherheitsnetz (15), das dazu eingerichtet ist, im aufgespannten Zustand die Öffnung (12) zwischen dem Laderaum und dem Fahrgastraum zu verschließen,
mit einer Befestigungseinrichtung (16,21), die zum Verbinden mit karosserieseitigen Aufnahmeeinrichtungen (24) vorgesehen ist, **dadurch gekennzeichnet, daß** eine wenigstens zwei Zustände aufweisenden Belastungsanzeigeeinrichtung (25) vorhanden ist, die beim Überschreiten einer konstruktiv vorgegebenen, auf das Sicherheitsnetz (15) einwirkenden Kraft aus dem einen Zustand in den anderen Zustand wechselt.

2. Sicherheitsnetzanordnung nach Anspruch 1, **dadurch gekennzeichnet, dass** zu der Befestigungseinrichtung (16,21) wenigstens eine zwei Enden aufweisende Strebe (16) gehört, die an einer Kante des Sicherheitsnetzes (15) vorgesehen ist, und dass an der Strebe (16) zwei Verankerungsglieder (21) angeordnet sind, die zum Einhängen in die karosserieseitigen Aufnahmeeinrichtungen (24) vorgesehen sind,

3. Sicherheitsnetzanordnung nach Anspruch 1, **dadurch gekennzeichnet, dass** die Belastungsanzeigeeinrichtung (25) derart gestaltet ist, dass der Wechsel aus dem einen Zustand in den anderen Zustand irreversibel ist.

4. Sicherheitsnetzanordnung nach Anspruch 2, **dadurch gekennzeichnet, dass** die Belastungsanzeigeeinrichtung (25) an der Strebe (16) angeordnet ist.

5. Sicherheitsnetzanordnung nach Anspruch 2, **dadurch gekennzeichnet, dass** die Belastungsanzeigeeinrichtung (25) an einem Ende der Strebe (16) angeordnet ist.

6. Sicherheitsnetzanordnung nach Anspruch 1, **dadurch gekennzeichnet, dass** an jedem Ende der Strebe (16) eine Belastungsanzeigeeinrichtung (25) angeordnet ist.

7. Sicherheitsnetzanordnung nach Anspruch 1, **dadurch gekennzeichnet, dass** sie mit wenigstens einer Energie verzehrenden Einrichtung (27,56) versehen ist.

8. Sicherheitsnetzanordnung nach Anspruch 7, **dadurch gekennzeichnet, dass** die Energie verzehrende Einrichtung (27,56) mit der Belastungsanzeigeinrichtung (25) zu einer Baueinheit vereint ist.

9. Sicherheitsnetzanordnung nach Anspruch 2, **dadurch gekennzeichnet, dass** zu der Belastungsanzeigeinrichtung (25) wenigstens ein Verankerungsglied (21) gehört.

10. Sicherheitsnetzanordnung nach Anspruch 2, **dadurch gekennzeichnet, dass** wenigstens eines der Verankerungglieder (21) gegenüber der Strebe (16) längsverschieblich sowie gegenüber der Strebe (16) begrenzt querbeweglich ist.

11. Sicherheitsnetzanordnung nach Anspruch 1, **dadurch gekennzeichnet, dass** zu der Belastungsanzeigeeinrichtung (25) ein zwischen zwei Stellungen hin- und herbewegliches Signalisierungglied (42) gehört, das vor einer die vorgegeben Kraft überschreitenden Belastung des Sicherheitsnetzes (15) in der einen Stellung steht und nach dem Überschreiten der vorgegeben Kraft in die andere Stellung wechselt.

12. Sicherheitsnetzanordnung nach Anspruch 11, **dadurch gekennzeichnet, dass** das Signalisierungsglied (42) schwenkbar ist.

13. Sicherheitsnetzanordnung nach Anspruch 11, **dadurch gekennzeichnet, dass** das Signalisierungsglied (42) in die andere Stellung vorgespannt ist.

14. Sicherheitsnetzanordnung nach den Ansprüchen 2 und 11, **dadurch gekennzeichnet, dass** das Signalisierungsglied (42) an der Strebe (16) gelagert ist.

15. Sicherheitsnetzanordnung nach Anspruch 14, **dadurch gekennzeichnet, dass** die Strebe (16) zumindest an einem Ende rohrförmig ist und dass die Belastungsanzeigeeinrichtung (25) eine in diesem Ende steckende Hülse (27) aufweist, die mit einem die Strebe (16) außen übergreifenden Abschnitt (37) versehen ist, an dem das Signalisierungsglied (42) gelagert ist.

16. Sicherheitsnetzanordnung nach den Ansprüchen 7 und 15, **dadurch gekennzeichnet, dass** die Hülse (27) einen Teil der Energie verzehrenden Einrichtung bildet.

17. Sicherheitsnetzanordnung nach Anspruch 16, **dadurch gekennzeichnet, dass** die Hülse (27) einen Fortsatz (36) trägt, der mit dem Signalisierungsglied (42) verrastet ist.

18. Sicherheitsnetzanordnung nach Anspruch 17, **dadurch gekennzeichnet, dass** die Verrastung derart gestaltet ist, dass sie beim Auslösen des Signalisierungsglieds (42) mechanisch zerstört wird.

19. Sicherheitsnetzanordnung nach Anspruch 11, **dadurch gekennzeichnet, dass** das Signalisierungsglied (42) mit einem Betätigungsglied (45) versehen ist, das zum Abfühlen einer Bewegung des zugehörigen Verankerungsglieds (21) eingerichtet ist.

20. Sicherheitsnetzanordnung nach Anspruch 19, **dadurch gekennzeichnet, dass** das Betätigungsglied (45) derart gestaltet ist, dass es auf eine Querbewegung des Verankerungsglieds (21) relativ zu der Strebe (16) anspricht.

## Claims

1. Safety net assembly (13) for protecting a car's passenger compartment from the cargo compartment, which is in communication with the passenger compartment via an opening (12),
including an edged safety net (15) which, when set up, is designed to close the opening (12) between the cargo compartment and the passenger compartment,
including a fixing device (16, 21) which is designed to communicate with body-side holding devices (24), **characterised in that** a load indicating device (25) having at least two states is present which, when a constructionally predetermined force acting on the safety net (15) is exceeded, changes from the one state to the other.

2. Safety net assembly as claimed in Claim 1, **characterised in that** the fixing device (16, 21) includes at least one two-ended strut (16) provided at an edge of the safety net (15), and that located on the strut (16) are two anchoring elements (21) which are designed to be inserted into the body-side holding devices (24).

3. Safety net assembly as claimed in Claim 1, **characterised in that** the load indicating device (25) is so designed that the change from the one state to the other is irreversible.

4. Safety net assembly as claimed in Claim 2, **characterised in that** the load indicating device (25) is located on the strut (16).

5. Safety net assembly as claimed in Claim 2, **characterised in that** the load indicating device (25) is located at one end of the strut (16).

6. Safety net assembly as claimed in Claim 1, **characterised in that** a load indicating device (25) is located at each end of the strut (16).

7. Safety net assembly as claimed in Claim 1, **characterised in that** it is provided with at least one energy absorbing device (27, 56).

8. Safety net assembly as claimed in Claim 7, **characterised in that** the energy absorbing device (27, 56) is combined with the load indicating device (25) to form a constructional unit.

9. Safety net assembly as claimed in Claim 2, **characterised in that** associated with the load indicating device (25) is at least one anchoring element (21).

10. Safety net assembly as claimed in Claim 2, **characterised in that** at least one of the anchoring elements (21) is movable longitudinally relative to the strut (16) and is movable to a limited degree transversely relative to the strut (16).

11. Safety net assembly as claimed in Claim 1, **characterised in that** associated with the load indicating device (25) is a signalling element (42) which is movable back and forth between two positions, which prior to a load exceeding the preset force being imposed on the safety net (15) is in the one position and after the preset force is exceeded changes to the other position.

12. Safety net assembly as claimed in Claim 11, **characterised in that** the signalling element (42) is pivotable.

13. Safety net assembly as claimed in Claim 11, **characterised in that** the signalling element (42) is pre-tensioned into the other position.

14. Safety net assembly as claimed in Claims 2 and 11, **characterised in that** the signalling element: (42) is mounted on the strut (16).

15. Safety net assembly as claimed in Claim 14, **characterised in that** the strut (16) is tubular at least at one end and that the load indicating device (25) includes a sleeve (27) which is inserted into this end and has a portion (37) which externally grips the strut (16), on which portion the signalling element (42) is mounted.

16. Safety net assembly as claimed in Claims 7 and 15, **characterised in that** the sleeve (27) forms part of the energy absorbing device.

17. Safety net assembly as claimed in Claim 16, **characterised in that** the sleeve (27) bears an extension (36) which is snap-locked with the signalling element (42).

18. Safety net assembly as claimed in Claim 17, **characterised in that** the snap-locking is so designed that it is mechanically destroyed on actuation of the signalling element (42).

19. Safety net assembly as claimed in Claim 11, **characterised in that** the signalling element (42) is provided with an actuating element (45) which is set up to detect a movement of the associated anchoring element (21).

20. Safety net assembly as claimed in Claim 19, **characterised in that** the actuating element (45) is so designed that it responds to a transverse movement of the anchoring element (21) relative to the strut (16).

## Revendications

1. Système de filet de sécurité (13) pour la protection de l'habitacle de véhicules automobiles vis-à-vis de l'espace de chargement communiquant avec l'habitacle par l'intermédiaire d'une ouverture (12), comprenant
un filet de sécurité (15) pourvu de bords, agencé de manière à fermer l'ouverture (12) entre l'espace de chargement et l'habitacle lorsqu'il est à l'état déployé,
un dispositif de fixation (16, 21) prévu pour être lié à des dispositifs récepteurs (24) côté carrosserie,
**caractérisé en ce qu'**il est prévu un dispositif d'indication de charge (25), avec au moins deux états qui, en cas de dépassement d'une force prédéterminée par construction agissant sur le filet de sécurité, passe d'un état à l'autre.

2. Système de filet de sécurité selon la revendication 1, **caractérisé en ce que** le dispositif de fixation (16, 21) comprend au moins une barre (16) avec deux extrémités, qui est prévue sur un bord du filet de sécurité (15) et **en ce que** deux éléments d'accrochage (21) sont disposés sur la barre (16), lesquels éléments d'accrochage sont prévus pour s'accrocher dans les dispositifs récepteurs (24) côté carrosserie.

3. Système de filet de sécurité selon la revendication 1, **caractérisé en ce que** le dispositif d'indication de charge (25) est agencé de telle manière que le passage d'un état à l'autre état soit irréversible.

4. Système de filet de sécurité selon la revendication 2, **caractérisé en ce que** le dispositif d'indication de charge (25) est disposé sur la barre (16).

5. Système de filet de sécurité selon la revendication 2, **caractérisé en ce que** le dispositif d'indication de charge (25) est disposé à une extrémité de la barre (16).

6. Système de filet de sécurité selon la revendication 1, **caractérisé en ce qu'**à chaque extrémité de la barre (16) est disposé un dispositif d'indication de charge (25).

7. Système de filet de sécurité selon la revendication 1, **caractérisé en ce qu'**il est pourvu d'au moins un dispositif (27, 56) d'absorption d'énergie.

8. Système de filet de sécurité selon la revendication 7, **caractérisé en ce que** le dispositif (27, 56) d'absorption d'énergie est combiné au dispositif d'indication de charge (25) pour former une unité de construction.

9. Système de filet de sécurité selon la revendication 2, **caractérisé en ce qu'**au moins un élément d'accrochage (21) fait partie du dispositif d'indication de charge (25).

10. Système de filet de sécurité selon la revendication 2, **caractérisé en ce qu'**au moins l'un des éléments d'accrochage (21) peut coulisser longitudinalement par rapport à la barre (16) et peut se déplacer de manière limitée transversalement à la barre (16).

11. Système de filet de sécurité selon la revendication 1, **caractérisé en ce que** le dispositif d'indication de charge (25) comprend un élément de signalisation (42) qui peut se déplacer suivant un mouvement de va-et-vient entre deux positions, lequel élément de signalisation avant une charge du filet de sécurité (15) dépassant la force prédéterminée se trouve dans une position et après le dépassement de la charge prédéterminée passe dans l'autre position.

12. Système de filet de sécurité selon la revendication 11, **caractérisé en ce que** l'élément de signalisation (42) peut pivoter.

13. Système de filet de sécurité selon la revendication 11, **caractérisé en ce que** l'élément de signalisation (42) est précontraint dans l'autre position.

14. Système de filet de sécurité selon la revendication 2, **caractérisé en ce que** l'élément de signalisation (42) est monté sur la barre (16).

15. Système de filet de sécurité selon la revendication 14, **caractérisé en ce que** la barre (16), à une extrémité au moins, a une forme de tube et **en ce que** le dispositif d'indication de charge (25) comprend un manchon (27) qui s'engage dans ladite extrémité et comporte une partie (37) qui chevauche extérieurement la barre (16), sur laquelle l'élément de signalisation (42) est monté.

16. Système de filet de sécurité selon les revendications 7 et 15, **caractérisé en ce que** le manchon (27) forme une partie du dispositif d'absorption d'énergie.

17. Système de filet de sécurité selon la revendication 16, **caractérisé en ce que** le manchon (27) porte un prolongement (36) qui est encliqueté avec l'élément de signalisation (42)

18. Système de filet de sécurité selon la revendication 17, **caractérisé en ce que** l'encliquetage est agencé de telle sorte que celui-ci soit détruit mécaniquement lors du déclenchement de l'élément de signalisation (42).

19. Système de filet de sécurité selon la revendication 11, **caractérisé en ce que** l'élément de signalisation (42) est muni d'un élément d'actionnement (45) qui est conçu en vue de détecter un déplacement de l'élément d'accrochage (21) concerné.

20. Système de filet de sécurité selon la revendication 19, **caractérisé en ce que** l'élément d'actionnement (45) est agencé de manière à ce qu'il réagisse à un déplacement transversal de l'élément d'accrochage (21) par rapport à la barre (16).
